# EUROPÄISCHE PATENTSCHRIFT

(11) **EP 2 190 328 B1**
(45) Veröffentlichungstag und Bekanntmachung des Hinweises auf die Patenterteilung: **12.01.2011**
(21) Anmeldenummer: 08801663.9
(22) Anmeldetag: 21.08.2008
(51) Int. Cl.: A47J 31/44, A47J 31/60

(54) **SYSTEM, BESTEHEND AUS MINDESTENS ZWEI BEHÄLTERN UND EINER KUPPLUNGSVORRICHTUNG**
SYSTEM COMPRISING AT LEAST TWO CONTAINERS AND A CONNECTION DEVICE
SYSTÈME, COMPRENANT AU MOINS DEUX RÉSERVOIRS ET UN DISPOSITIF DE RACCORDEMENT

(30) Priorität: 24.08.2007 DE 102007040307
(43) Veröffentlichungstag der Anmeldung: 02.06.2010
(73) Patentinhaber: Miele & Cie. KG, 33332 Gütersloh (DE); Eugster/Frismag AG, 8580 Amriswil (CH)
(72) Erfinder: GIEZENDANNER, Stefan, CH-9054 Haslen (CH); JUNGCLAUS, Dirk, 59302 Oelde (DE); MÜLLER, Thomas, CH-8590 Romanshorn (CH); NATTKEMPER, Jörg, 59065 Hamm (DE); WENDRICH, Franziska, 48336 Sassenberg (DE)
(86) Internationale Anmeldenummer: PCT/EP2008/006889
(87) Internationale Veröffentlichungsnummer: WO 2009/027050

(56) Entgegenhaltungen:
- WO-A-2006/111158
- DE-U1-202004 003 305
- US-A- 5 473 972

## Beschreibung

Die Erfindung betrifft ein System, bestehend aus mindestens zwei Behältern und einer Kupplungsvorrichtung zum flüssigkeitsleitenden Anschluss der Behälter an ein Haushaltsgerät.

Aus der EP 1 483 991 B1 ist bereits ein System bekannt, bei dem ein Behälter und eine Kupplungsvorrichtung zu dessen flüssigkeitsleitenden Anschluss an eine Kaffeemaschine verwendet werden. Hierzu weist die Kupplungsvorrichtung eine Flüssigkeitsleitung zum Fördern der Flüssigkeit aus dem in die Kaffeemaschine eingestellten Behälter in das Wasserleitungssystem der Kaffeemaschine auf.

Der Erfindung stellt sich somit das Problem ein System anzugeben, bei dem sehr unterschiedlich geformte und ausgebildete Behälter mittels einer einzigen Kupplungsvorrichtung flüssigkeitsleitend an ein Haushaltsgerät angeschlossen werden können.

Erfindungsgemäß wird dieses Problem durch ein System mit den Merkmalen des Patentanspruchs 1 gelöst. Vorteilhafte Ausgestaltungen und Weiterbildungen der Erfindung ergeben sich aus den nachfolgenden Unteransprüchen.

Die mit der Erfindung erreichbaren Vorteile bestehen insbesondere darin, dass sehr unterschiedlich geformte und ausgebildete Behälter mittels einer einzigen Kupplungsvorrichtung flüssigkeitsleitend an ein Haushaltsgerät angeschlossen werden können. Die flüssigkeitsführenden Leitungen von Haushaltsgeräten, beispielsweise von Kaffeemaschinen, werden im Laufe der Betriebszeit in der Regel nicht nur von einer einzigen Flüssigkeitsart durchströmt. Viele Haushaltsgeräte verfügen über fest programmierte oder manuell aufrufbare Reinigungszyklen, während der die Leitungen anstelle mit der Flüssigkeit für den Normalbetrieb, beispielsweise Milch, Wasser oder dergleichen, beispielsweise mit Heißwasser, Dampf, Reinigungsflüssigkeit oder dergleichen durchströmt werden. Zumindest ein Teil der vorgenannten Flüssigkeiten für die Reinigung und das Spülen der Leitungen des Haushaltsgeräts sind in Behältern abgefüllt oder angesetzt und werden während des jeweiligen Reinigungszyklus über ein freies Leitungsende der flüssigkeitsführenden Leitung in diese eingesaugt. Diese Behälter unterscheiden sich aufgrund von deren Zweckbestimmung nach Art, Material und Formgebung teilweise erheblich von den Behältern, die für den Normalbetrieb des Haushaltsgeräts verwendet werden. Das erfindungsgemäße System ermöglicht hier die Verwendung einer einzigen Kupplungsvorrichtung für den Anschluss von zumindest in dem Kontaktbereich mit der Kupplungsvorrichtung sehr unterschiedlich geformten und gestalteten Behältern. Durch das erfindungsgemäße System ist darüber hinaus eine feste aber lösbare Verbindung von Kupplungsvorrichtung und Behälter ermöglicht, so dass ein ungewünschtes Lösen wirksam verhindert ist.

Grundsätzlich ist die lösbare Verbindung von Behälter und Kupplungsvorrichtung über die Kupplungsglieder nach Art, Material und Anordnung in weiten geeigneten Grenzen frei wählbar. Vorteilhafterweise ist zumindest eines der beiden Kupplungspaare in der Art eines Bajonettverschlusses ausgebildet. Hierdurch ist die lösbare Verbindung auf konstruktiv einfache und robuste Weise realisiert.

Durch die Ausbildung der Kupplungsvorrichtung als Deckel für den Behälter ist sichergestellt, dass die darin bevorratete Flüssigkeit zum einen vor Verunreinigung durch die Umwelt wirksam geschützt ist. Zum anderen kann bei einer im Wesentlichen dichten Anlage des Deckels an dem Behälter dieser transportiert werden, ohne dass die Gefahr des Überlaufens oder Überschwappens besteht.

Grundsätzlich sind das erste und das zweite Kupplungsglied nach Art, Material und Anordnung in weiten geeigneten Grenzen frei wählbar. Zweckmäßigerweise sind das erste und das zweite Kupplungsglied zueinander konzentrisch an dem Deckel angeordnet.

Eine vorteilhafte Weiterbildung sieht vor, dass der Deckel eine Handhabe, insbesondere einen Handgriff, aufweist. Auf diese Weise ist das An- und Auskuppeln mit weniger Kraftaufwand durchführbar. Ferner ist dadurch eine sichere Handhabung der Kupplungsvorrichtung mit und ohne einem daran lösbar befestigten Behälter gewährleistet.

Eine andere vorteilhafte Weiterbildung sieht vor, dass der Deckel eine Schürze zur Abdeckung des Kontaktbereichs von Kupplungsvorrichtung und dem daran angekuppelten Behälter aufweist. Hierdurch ist der optische Gesamteindruck der Kupplungsvorrichtung mit und ohne angekuppelten Behälter verbessert.

Eine vorteilhafte Weiterbildung der vorgenannten Ausführungsform sieht vor, dass die Schürze zumindest eine Führungsbahn aufweist, in die das korrespondierende Kupplungsglied zumindest einer der Behälter bei dessen Überführung in die an der Kupplungsvorrichtung angekuppelte Lage eingreift. Auf diese Weise ist gewährleistet, dass das korrespondierende Kupplungsglied mit dem ersten oder zweiten Kupplungsglied der Kupplungsvorrichtung sicher in Eingriff gelangt.

Eine weitere vorteilhafte Weiterbildung sieht vor, dass der Deckel einen Grundkörper aufweist, an dem die Schürze bewegbar gehalten ist. Hierdurch ist es möglich, die Behälter in dem Kontaktbereich mit der Kupplungsvorrichtung freier zu gestalten, ohne die Kupplungsfunktion zu beeinträchtigen. Dadurch ist die Bandbreite der an die Kupplungsvorrichtung ankuppelbaren Behälter vergrößert.

Eine andere vorteilhafte Weiterbildung sieht vor, dass die Schürze in der angekuppelten Lage des Behälters an dem Grundkörper mittels einer ersten Rastverbindung lösbar fixiert ist. Auf diese Weise ist gewährleistet, dass sich die Kupplungsverbindung nicht in ungewünschter Weise löst.

Eine vorteilhafte Weiterbildung der vorgenannten Ausführungsform sieht vor, dass die Form der Schürze derart auf die Form zumindest eines der Behälter abgestimmt ist, dass die Schürze mit diesem Behälter bei dessen Überführung in die angekuppelte Lage zuerst eine formschlüssige Verbindung eingeht und durch die weitere Überführung die erste Rastverbindung selbsttätig herstellbar ist. Hierdurch ist die Rastverbindung ohne zusätzliche Bewegungsabläufe herstellbar, was den Bedienkomfort verbessert.

Eine weitere vorteilhafte Weiterbildung sieht vor, dass die Schürze in der ausgekuppelten Lage des Behälters an dem Grundkörper mittels einer zweiten Rastverbindung lösbar fixiert ist. Auf diese Weise ist die Schürze in der relativen Lage zu dem Grundkörper in der ausgekuppelten Lage fixiert, so dass ein nachfolgendes Ankuppeln eines Behälters an die Kupplungsvorrichtung erleichtert ist.

Eine vorteilhafte Weiterbildung der vorgenannten Ausführungsform sieht vor, dass die Form der Schürze derart auf die Form zumindest eines der Behälter abgestimmt ist, dass die Schürze mit diesem Behälter in der angekuppelten Lage des Behälters formschlüssig verbunden ist und durch die Überführung in die ausgekuppelte Lage des Behälters die zweite Rastverbindung selbsttätig herstellbar ist. Hierdurch ist die Rastverbindung ohne zusätzliche Bewegungsabläufe herstellbar, was den Bedienkomfort weiter verbessert.

Grundsätzlich sind die Behälter nach Art, Material und Ausdehnung in weiten geeigneten Grenzen frei wählbar. Vorteilhafterweise ist die Öffnung zumindest eines der Behälter durch einen Rand begrenzt, an dem ein aus zwei sich diametral gegenüberliegenden Rasthaken ausgebildetes korrespondierendes Kupplungsglied angeordnet ist. Hierdurch ist ein sicherer Eingriff der Kupplungsglieder von Behälter und Kupplungsvorrichtung auf konstruktiv einfache Weise gewährleistet.

Eine vorteilhafte Weiterbildung der vorgenannten Ausführungsform sieht vor, dass an dem Rand zumindest eine im Wesentlichen dazu vertikal verlaufende Ausnehmung in der

Behälterwand ausgebildet ist. Auf diese Weise ist die Funktionalität des Behälters weiter verbessert. Beispielsweise kann durch die zusätzliche Öffnung in der Behälterwand auch in der angekuppelten Lage des Behälters eine weitere Leitung in den Behälter geführt werden.

Ein Ausführungsbeispiel der Erfindung ist in den Zeichnungen rein schematisch dargestellt und wird nachfolgend näher beschrieben. Es zeigt
- Figur 1: eine Kaffeemaschine mit eingestelltem Milchbehälter in einer Frontansicht,
- Figur 2: die Tür der Kaffeemaschine aus Fig. 1 in einer Einzeldarstellung und mit Blick auf die Rückseite,
- Figur 3: den Milchbehälter mit angekuppelter Kupplungsvorrichtung,
- Figur 4: den Milchbehälter aus Fig. 3 ohne Kupplungsvorrichtung,
- Figur 5: einen Pflegebehälter ohne Kupplungsvorrichtung,
- Figur 6: die Kupplungsvorrichtung in einer Unteransicht,
- Figur 7: die Kupplungsvorrichtung in einer ersten Explosionsdarstellung,
- Figur 8: die Kupplungsvorrichtung in einer zweiten Explosionsdarstellung,
- Figur 9: eine andere Frontansicht der Kaffeemaschine und
- Figur 10: eine weitere Frontansicht der Kaffeemaschine.

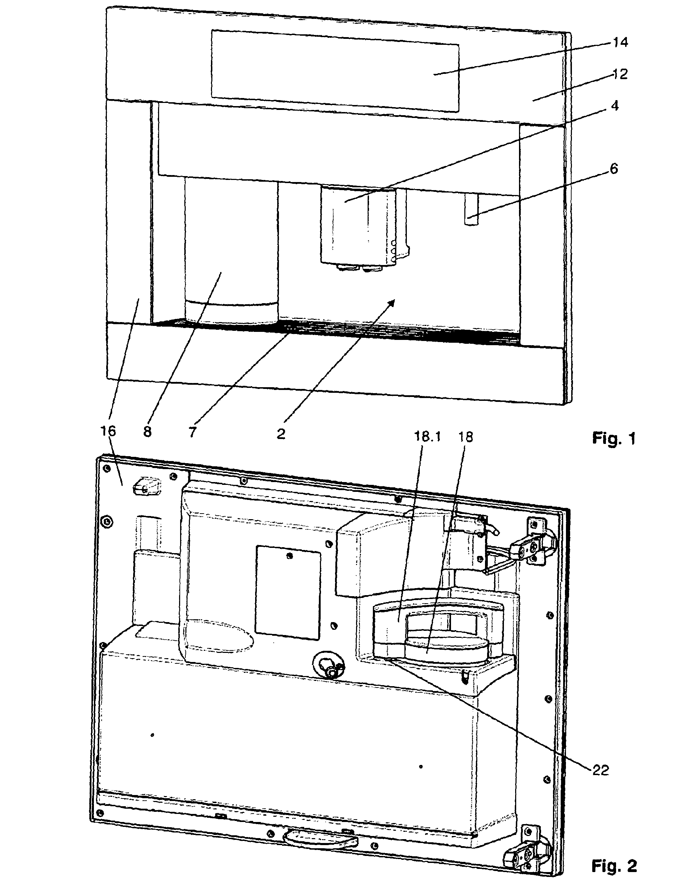

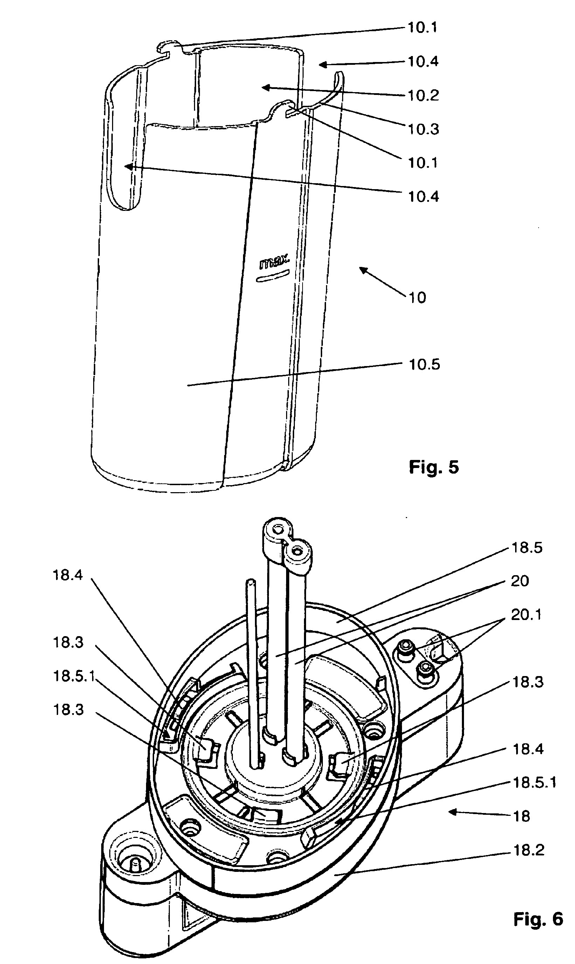

Fig. 1 zeigt eine Kaffeemaschine, bei der das erfindungsgemäße System verwendet ist. Die Kaffeemaschine weist einen Ausgabebereich 2 für Kaffee, Milch, Milchschaum und Heißwasser auf. Hierzu sind an dem Ausgabebereich 2 ein Zentralauslauf 4 mit je einen Auslauf für Milch, Milchschaum und Kaffee sowie ein separater Auslauf 6 für Heißwasser vorgesehen. Der Ausgabebereich 2 wird nach unten durch einen Abtropfrost 7 begrenzt, auf den Tassen, ein als Milchbehälter ausgebildeter Behälter 8 und ein in Fig. 5 näher dargestellter und als Pflegebehälter ausgebildeter weiterer Behälter 10 abstellbar sind. Oberhalb des Ausgabebereichs 2 ist eine Bedienblende 12 mit einer grafikfähigen Anzeige 14 angeordnet, wobei die Anzeige 14 auch sogenannte Touch-Bedienelemente aufweist, die hier nicht näher dargestellt sind. Die Anzeige 14 ist mit einer nicht näher dargestellten elektrischen Steuerung der Kaffeemaschine signalübertragend verbunden.

Wie aus Fig. 2 deutlich hervorgeht, sind die oben genannten Bauteile der Kaffeemaschine hier vollständig in der Tür 16 der Kaffeemaschine integriert. Die Tür 16 schließt den nicht näher dargestellten Korpus der Kaffeemaschine nach vorne hin ab. In dem Korpus selbst sind beispielsweise Vorrats- und Entsorgebehälter angeordnet. Während in der Fig. 1 lediglich der Milchbehälter 8 teilweise dargestellt ist, zeigt Fig. 2 die an den Milchbehälter 8 angekuppelte Kupplungsvorrichtung 18. Die Kupplungsvorrichtung 18 ist hier als Deckel ausgebildet, der eine Öffnung 8.1 des Milchbehälters 8 in der angekuppelten Lage überdeckt. Zur leichteren Handhabung weist die Kupplungsvorrichtung 18 eine als Handgriff ausgebildete Handhabe 18.1 auf. Somit kann der Benutzer den angekuppelten Milchbehälter 8 mittels des Handgriffs 18.1 auf einfache Weise in der Bildebene nach oben aus dem in der Tür 16 ausgebildeten Aufnahmeschacht herausziehen.

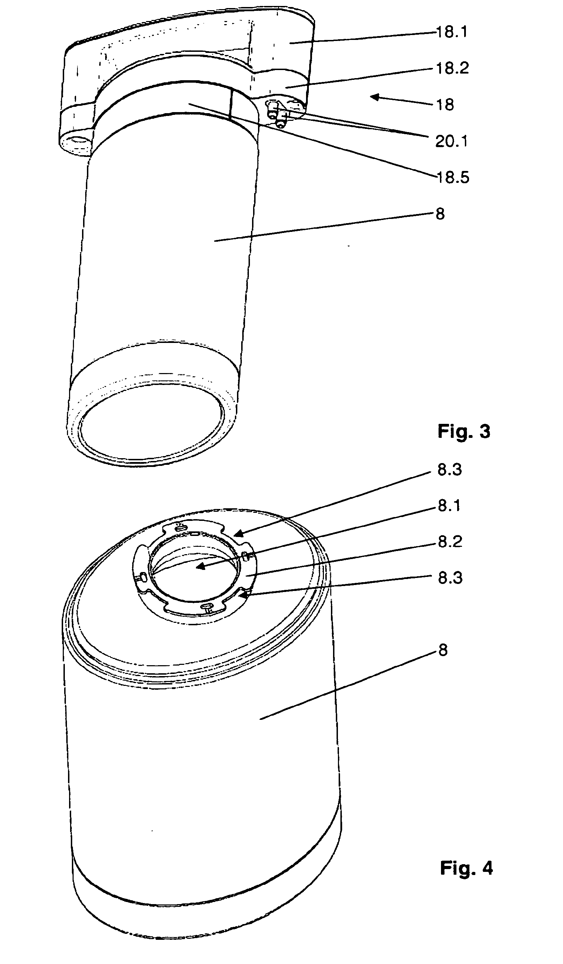

In Fig. 3 ist der angekuppelte Milchbehälter 8 gelöst von der Kaffeemaschine dargestellt. Der Milchbehälter 8 ist hier als Isoliergefäß aus Edelstahl ausgebildet und derart dimensioniert, dass er etwa den Tagesbedarf der Kaffeemaschine an Milch aufnehmen und kühl halten kann. Somit kann der Benutzer die gekühlte Milch aus dem Kühlschrank in den Milchbehälter 8 über die in Fig. 4 näher dargestellte Öffnung 8.1 einfüllen und den Milchbehälter 8 durch das später näher erläuterte Ankuppeln der Kupplungsvorrichtung 18 verschließen. Ohne die Gefahr des Verschüttens von eingefüllter Milch kann der Milchbehälter 8 dann zur Kaffeemaschine gebracht und in den Aufnahmeschacht eingestellt werden. Für den Rest des Tages ist es nicht erforderlich, den als Isoliergefäß ausgebildeten Milchbehälter 8 wieder in den Kühlschrank einzulagern. Sofern zum Tagesende hin noch Milch in dem Milchbehälter 8 vorhanden ist, kann diese wie üblich in einem Kühlschrank über Nacht kühl gehalten werden.

Wie aus Fig. 4 deutlich hervorgeht, ist der die Öffnung 8.1 des Milchbehälters 8 umgebende Rand als ein Teil eines Bajonettverschlusses, nämlich als korrespondierendes Kupplungsglied 8.2 ausgebildet. Das korrespondierende Kupplungsglied 8.2 ist hier als Flansch mit vier Ausklinkungen 8.3 ausgeführt.

Zu Reinigungszwecken werden die nachfolgend noch näher erläuterten Milchleitungen 20 in regelmäßigen Abständen mit einer Reinigungsflüssigkeit gespült. Die Reinigungsflüssigkeit wird hierzu in dem als Pflegebehälter ausgebildeten weiteren Behälter 10 eingefüllt oder angesetzt und auf später noch näher zu erläuternde Weise mit der Kupplungsvorrichtung 18 verbunden. Der Pflegebehälter 10 ist hier als ein Kunststoffbehälter ausgebildet. Als korrespondierende Kupplungsglieder 10.1 weist der Pflegebehälter 10 zwei Rasthaken auf, die an dem die Öffnung 10.2 begrenzenden Rand 10.3 des Pflegebehälters 10 sich diametral gegenüberliegend angeordnet sind.

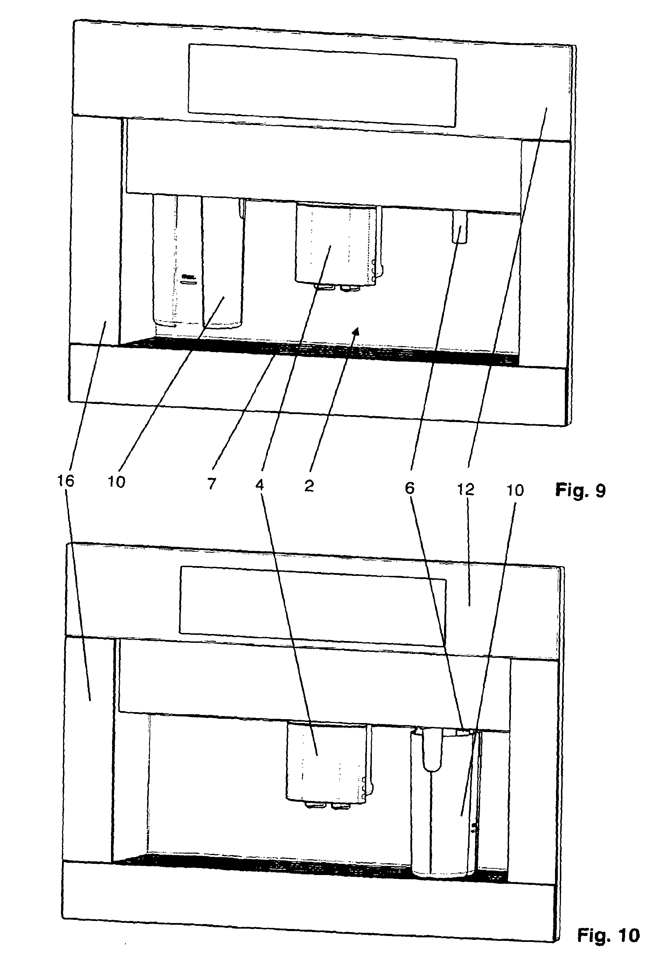

Zur Reinigung der Milchleitungen 20 kuppelt der Benutzer den Pflegebehälter 10 an die Kupplungsvorrichtung 18 an und steckt diesen an den Aufnahmeschacht an der Tür 16 ein. Siehe Fig. 2 in Verbindung mit der Fig. 9.

Um den Pflegebehälter 10 in einer weiteren Funktion als Sammelbehälter für an der Kaffeemaschine von Zeit zu Zeit erforderliche Entkalkungsvorgänge für die wasserführenden Leitungen benutzen zu können, weist der Pflegebehälter 10 zwei sich diametral gegenüberliegende Ausnehmungen 10.4 auf, die sich ausgehend vom Rand 10.3 und im Wesentlichen vertikal dazu in der Wand 10.5 des Pflegebehälters 10 erstrecken. Grundsätzlich wäre jedoch eine einzige Ausnehmung 10.4 für den Zweck ausreichend. Auf diese Weise kann der Pflegebehälter 10 in dem ausgekuppelten Zustand in dem Ausgabebereich 2 unter den separaten Auslauf 6 geschoben werden. Die Ausnehmungen 10.4 bieten den Vorteil, dass der Pflegebehälter 10 dabei nicht gekippt werden muss. Ferner kann auf diese Weise die Höhe des Pflegebehälters 10 und damit das nutzbare Volumen maximiert werden. Siehe hierzu auch die Fig. 9 und 10.

Fig. 6 zeigt die Kupplungsvorrichtung 18 in einer perspektivischen Unteransicht. Mittig in der Kupplungsvorrichtung 18 sind die zwei als Milchleitungen ausgebildete Flüssigkeitsleitungen 20 integriert. Die Auslassenden 20.1 der Milchleitungen 20 sind zum lösbaren Anschluss an in Fig. 2 dargestellte Leitungen 22 ausgebildet. Die Auslassenden 20.1 werden bei dem Einstellen des an die Kupplungsvorrichtung 18 angekuppelten Milchbehälters 8 in die an der Tür 16 angeordneten Leitungen 22 eingesteckt. Die Milchleitungen 20 sind in einem Grundkörper 18.2 der Kupplungsvorrichtung 18 integriert. An dem Grundkörper 18.2 sind ferner ein erstes Kupplungsglied 18.3 in der Art von vier sich kreuzartig gegenüberliegenden Haltelaschen und ein zweites Kupplungsglied 18.4 angeordnet, wobei das zweite Kupplungsglied 18.4 aus zwei sich diametral gegenüberliegenden Haken gebildet ist. Die beiden Kupplungsglieder 18.3 und 18.4 sind an dem Grundkörper 18.2 zueinander konzentrisch angeordnet, wobei das erste Kupplungsglied 18.3 mit dem korrespondierenden Kupplungsglied 8.2 des Milchbehälters 8 und das zweite Kupplungsglied 18.4 mit dem korrespondierenden Kupplungsglied 10.1 des Pflegebehälters 10 jeweils nach Art eines Bajonettverschlusses zusammenwirkt.

An dem Grundkörper 18.2 ist eine Schürze 18.5 um eine zu den beiden Milchleitungen 20 parallel verlaufenden imaginäre Drehachse drehbeweglich gehalten. Wie aus Fig. 3 in Verbindung mit Fig. 4 deutlich hervorgeht, überdeckt die Schürze 18.5 in der angekuppelten Lage des Milchbehälters 8 dessen Kontaktbereich mit der Kupplungsvorrichtung 18. Gleiches gilt für den Pflegebehälter 10, wobei hier die Ausnehmungen 10.4 durch die Schürze 18.5 nicht vollständig überdeckt werden. Die Schürze 18.5 weist zwei Führungsbahnen 18.5.1 auf, in denen das korrespondierende Kupplungsglied 10.1 des Pflegebehälters 10 bei dessen Überführung in die an die Kupplungsvorrichtung 18 angekuppelte Lage eingreift. Auf diese Weise ist das korrespondierende Kupplungsglied 10.1 trotz der relativ elastischen konstruktiven Ausbildung sicher geführt. Eine derartige Führungsbahn für das korrespondierende Kupplungsglied 8.2 des Milchbehälters 8 ist hier aufgrund der Materialwahl und der konstruktiven Ausbildung nicht erforderlich. Grundsätzlich wäre dies jedoch möglich.

Um den Milchbehälter 8 an die Kupplungsvorrichtung 18 anzukuppeln, steckt der Benutzer die beiden Teile gemäß Fig. 3 zusammen, so dass das erste Kupplungsglied 18.3 in die Ausklinkungen 8.3 des Milchbehälters 8 eindringen. Durch ein Verdrehen der Kupplungsvorrichtung 18 um die Längsachse des Milchbehälters 8 greifen das erste Kupplungsglied 18.3 der Kupplungsvorrichtung 18 und das dazu korrespondierende Kupplungsglied 8.2 des Milchbehälters 8 auf dem Fachmann ansich bekannte Weise ineinander. Der Milchbehälter 8 ist an der Kupplungsvorrichtung 18 angekuppelt. Zum Lösen der auf diese Weise hergestellten Kupplungsverbindung dreht der Benutzer die Kupplungsvorrichtung 18 relativ zu dem Milchbehälter 8 in die entgegengesetzte Richtung um dessen Längsachse.

Die Kupplung von Pflegebehälter 10 und Kupplungsvorrichtung 18 wird analog zu dem vorgenannten Ablauf hergestellt. Der Benutzer steckt den Pflegebehälter ähnlich wie für den Milchbehälter in Fig. 3 gezeigt zusammen, so dass die Rasthaken des Pflegebehälters 10, also das korrespondierende Kupplungsglied 10.1, in die Führungsbahnen 18.5.1 eingreifen. Durch ein Verdrehen der Kupplungsvorrichtung 18 um die Längsachse des Pflegebehälters 10 greifen die Haken 18.4, also das zweite Kupplungsglied 18.4 der Kupplungsvorrichtung 18, und das dazu korrespondierende Kupplungsglied 10.1 auf dem Fachmann ansich bekannte Weise ineinander. Dabei werden die Rasthaken 10.1 in den Führungsbahnen 18.5.1 geführt, so dass der Eingriff der beiden Kupplungsglieder 18.4 und 10.1 sicher hergestellt wird. Der Pflegebehälter 10 ist an der Kupplungsvorrichtung 18 angekuppelt. Zum Lösen der auf diese Weise hergestellten Kupplungsverbindung dreht der Benutzer die Kupplungsvorrichtung 18 relativ zu dem Pflegebehälter 10 in die entgegengesetzte Richtung um dessen Längsachse.

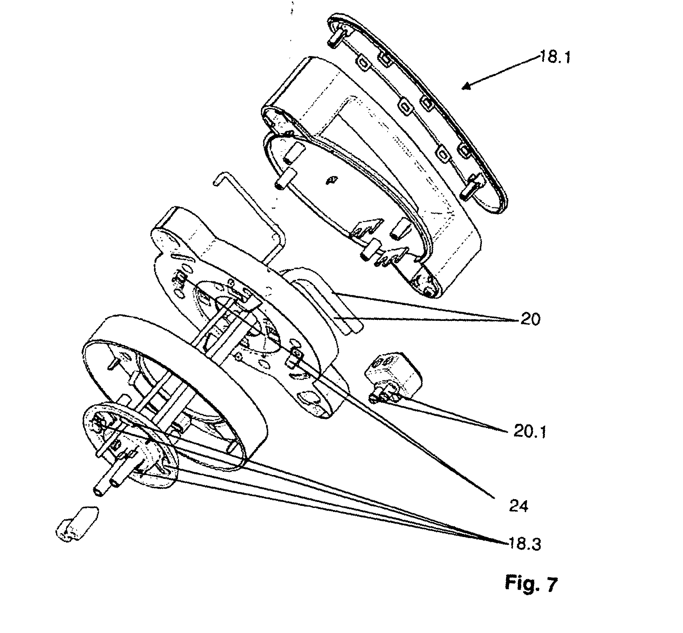

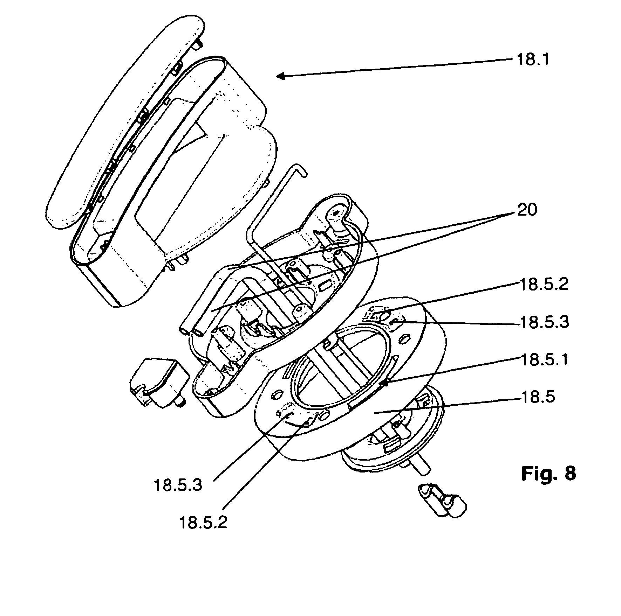

Wie ferner aus der Zusammenschau von Fig. 3, 4 und 6 hervorgeht, ist die Form der Schürze 18.5 derart auf die hier ovale Querschnittsform des Milchbehälters 8 und des Pflegebehälters 10 abgestimmt, dass die Schürze 18.5 mit dem Behälter 8 oder 10 bei dessen Überführung in die angekuppelte Lage zuerst eine formschlüssige Verbindung eingeht. Bei der weiteren Überführung hintergreifen als Federzungen ausgebildete und an dem Grundkörper 18.2 angeordnete Rastelemente 24 einen ersten Steg 18.5.2 der Schürze 18.5, so dass in der angekuppelten Lage des Behälters 8 oder 10 die Schürze 18.5 an dem Grundkörper 18.2 über diese Rastverbindung lösbar fixiert ist. Siehe hierzu Fig. 7 in Verbindung mit Fig. 8. Würde die Schürze 18.5 mit dem Behälter 8 oder 10 keine formschlüssige Verbindung eingehen, würde die Rastverbindung nicht gleichzeitig mit der Überführung in die angekuppelte Lage hergestellt werden können. In diesem Fall müsste die Rastverbindung durch eine zusätzliche Betätigung des Benutzers hergestellt werden, was grundsätzlich auch denkbar wäre.

Analoges gilt für das Lösen der Kupplung, also die Überführung des Behälters 8 oder 10 in die ausgekuppelte Lage. Die Form der Schürze 18.5 ist, wie oben bereits erläutert, derart auf die Form zumindest eines der Behälter 8 oder 10 abgestimmt, dass die Schürze 18.5 mit diesem Behälter 8 oder 10 in der angekuppelten Lage des Behälters 8 oder 10 formschlüssig verbunden ist. Durch die Überführung in die ausgekuppelte Lage des Behälters 8 oder 10 gelangt das Rastelement 24 in Eingriff mit einem zweiten Steg 18.5.3 der Schürze 18.5, so dass die zweite Rastverbindung ebenfalls selbsttätig herstellbar ist. In der ausgekuppelten Lage des Behälters 8 oder 10 hintergreift das Rastelement 24 den zweiten Steg 18.5.3.

Fig. 7 und 8 zeigen die Kupplungsvorrichtung 18 nochmals in verschiedenen Explosionsdarstellungen, so dass die oben bereits erläuterten Einzelheiten leichter zu erkennen sind.

Die erfindungsgemäße Lösung ist nicht auf das vorliegende Ausführungsbeispiel begrenzt. Beispielsweise sind auch mehr als zwei im Kontaktbereich mit der Kupplungsvorrichtung formverschiedene Behälter denkbar. Entsprechend erhöht sich die Zahl der erforderlichen Kupplungspaare. Auch ist die Art, Anordnung und das Material der Kupplung in weiten geeigneten Grenzen wählbar. Beispielsweise ist anstelle eines oder beider Bajonettverschlüsse auch eine Schraubverbindung oder andere dem Fachmann bekannte und geeignete lösbare Verbindungen möglich. Ferner ist die Verwendung der Erfindung nicht auf Kaffeemaschinen oder Getränkebereiter allgemein beschränkt. Auch bei anderen flüssigkeitsführenden Haushaltsgeräten, bei denen Flüssigkeiten aus separaten Behältern verwendet werden, ist die Erfindung vorteilhaft einsetzbar. Beispielsweise wäre dies bei Gargeräten mit einer Wasserzufuhr, Dampfgarer oder Kombinationsgeräten mit einer Wasser- oder Dampfeinleitung in den Garraum, denkbar.

## Patentansprüche

1. System, bestehend aus mindestens zwei Behältern (8, 10) und einer Kupplungsvorrichtung (18) zum flüssigkeitsleitenden Anschluss der Behälter (8, 10) an ein Haushaltsgerät, wobei die Behälter (8, 10) zumindest in dem Kontaktbereich mit der Kupplungsvorrichtung (18) voneinander formverschieden ausgebildet sind und die Kupplungsvorrichtung (18) eine Flüssigkeitsleitung (20) zum Fördern der Flüssigkeit aus dem jeweils angekuppelten Behälter (8, 10) in das Haushaltsgerät aufweist, deren Auslassende (20.1) zum lösbaren Anschluss an eine Leitung (22) des Haushaltsgeräts ausgebildet ist, und wobei die Kupplungsvorrichtung (18) ein erstes und ein davon verschiedenes zweites Kupplungsglied (18.3, 18.4) und der eine Behälter (8) ein zu dem ersten und der andere Behälter (10) ein zu dem zweiten Kupplungsglied (18.3, 18.4) korrespondierendes Kupplungsglied (8.2, 10.1) zur lösbaren Verbindung von Kupplungsvorrichtung (18) und jeweiligem Behälter (8, 10) aufweisen.

2. System nach Anspruch 1,
**dadurch gekennzeichnet,**
**dass** zumindest eines der beiden Kupplungspaare (18.3, 8.2;18.4, 10.1) in der Art eines Bajonettverschlusses ausgebildet ist.

3. System nach Anspruch 1 oder 2,
**dadurch gekennzeichnet,**
**dass** die Kupplungsvorrichtung (18) als ein Deckel ausgebildet ist, der in dem an den jeweiligen Behälter (8, 10) angekuppelten Zustand eine Öffnung (8.1, 10.2) des Behälters (8, 10) im Wesentlichen abdeckt.

4. System nach Anspruch 3,
**dadurch gekennzeichnet,**
**dass** das erste und das zweite Kupplungsglied (18.3, 18.4) zueinander konzentrisch an dem Deckel (18) angeordnet sind.

5. System nach Anspruch 3 oder 4,
**dadurch gekennzeichnet,**
**dass** der Deckel (18) eine Handhabe (18.1), insbesondere einen Handgriff, aufweist.

6. System nach einem der Ansprüche 3 bis 5,
**dadurch gekennzeichnet,**
**dass** der Deckel (18) eine Schürze (18.5) zur Abdeckung des Kontaktbereichs von Kupplungsvorrichtung (18) und dem daran angekuppelten Behälter (8, 10) aufweist.

7. System nach Anspruch 6,
**dadurch gekennzeichnet,**
**dass** die Schürze (18.5) zumindest eine Führungsbahn (18.5.1) aufweist, in die das korrespondierende Kupplungsglied (10.1) zumindest einer der Behälter (10) bei dessen Überführung in die an der Kupplungsvorrichtung (18) angekuppelte Lage eingreift.

8. System nach einem der Ansprüche 6 oder 7,
**dadurch gekennzeichnet,**
**dass** der Deckel (18) einen Grundkörper (18.2) aufweist, an dem die Schürze (18.5) bewegbar gehalten ist.

9. System nach Anspruch 8,
**dadurch gekennzeichnet,**
**dass** die Schürze (18.5) in der angekuppelten Lage des Behälters (8, 10) an dem Grundkörper (18.2) mittels einer ersten Rastverbindung (24, 18.5.2) lösbar fixiert ist.

10. System nach Anspruch 9,
**dadurch gekennzeichnet,**
**dass** die Form der Schürze (18.5) derart auf die Form zumindest eines der Behälter (8, 10) abgestimmt ist, dass die Schürze (18.5) mit diesem Behälter (8, 10) bei dessen Überführung in die angekuppelte Lage zuerst eine formschlüssige Verbindung eingeht und durch die weitere Überführung die erste Rastverbindung (24, 18.5.2) selbsttätig herstellbar ist.

11. System nach einem der Ansprüche 8 bis 10,
**dadurch gekennzeichnet,**
**dass** die Schürze (18.5) in der ausgekuppelten Lage des Behälters (8, 10) an dem Grundkörper (18.2) mittels einer zweiten Rastverbindung (24, 18.5.3) lösbar fixiert ist.

12. System nach Anspruch 11,
**dadurch gekennzeichnet,**
**dass** die Form der Schürze (18.5) derart auf die Form zumindest eines der Behälter (8, 10) abgestimmt ist, dass die Schürze (18.5) mit diesem Behälter (8, 10) in der angekuppelten Lage des Behälters (8, 10) formschlüssig verbunden ist und durch die Überführung in die ausgekuppelte Lage des Behälters (8, 10) die zweite Rastverbindung (24, 18.5.3) selbsttätig herstellbar ist.

13. System nach Anspruch 1 oder 2,
**dadurch gekennzeichnet,**
**dass** die Öffnung (10.2) zumindest eines der Behälter (10) durch einen Rand (10.3) begrenzt ist, an dem ein aus zwei sich diametral gegenüberliegenden Rasthaken (10.1) ausgebildetes korrespondierendes Kupplungsglied angeordnet ist.

14. System nach Anspruch 13,
**dadurch gekennzeichnet,**
**dass** an dem Rand (10.3) zumindest eine im Wesentlichen dazu vertikal verlaufende Ausnehmung (10.4) in der Behälterwand (10.5) ausgebildet ist.

## Claims

1. System consisting of at least two containers (8, 10) and a coupling device (18) for fluidically connecting the containers (8, 10) to a domestic appliance, wherein the containers (8, 10) are formed so as to have a different shape from one another at least in the contact region with the coupling device (18) and the coupling device (18) comprises a fluid line (20) for conveying the fluid from each of the coupled containers (8, 10) into the household appliance, the outlet end (20.1) of said fluid line being configured for detachable connection to a line (22) of the household appliance and wherein the coupling device (18) comprises a first coupling member and a second coupling member (18.3, 18.4) which is different therefrom, and one container (8) comprises a coupling member (8.2, 10.1) which corresponds to the first coupling member and the other container (10) comprises a coupling member (8.2, 10.1) which corresponds to the second coupling member (18.3, 18.4) for the detachable connection of the coupling device (18) to the respective container (8, 10).

2. System according to claim 1, **characterised in that** at least one of the two coupling pairs (18.3, 8.2; 18.4, 10.1) is formed in the manner of a bayonet fitting.

3. System according to either claim 1 or claim 2, **characterised in that** the coupling device (18) is formed as a lid which substantially covers an opening (8.1, 10.2) of the container (8, 10) when said coupling device is coupled to the respective container (8, 10).

4. System according to claim 3, **characterised in that** the first and the second coupling members (18.3, 18.4) are arranged concentrically with one another on the lid (18).

5. System according to either claim 3 or claim 4, **characterised in that** the lid (18) comprises a handle (18.1), in particular a grab handle.

6. System according to any one of claims 3 to 5, **characterised in that** the lid (18) comprises a skirt (18.5) for covering the contact region of the coupling device (18) and the container (8, 10) coupled thereto.

7. System according to claim 6, **characterised in that** the skirt (18.5) comprises at least one guideway (18.5.1) in which the corresponding coupling member (10.1) of at least one of the containers (10) engages when said container is transferred into the position in which it is coupled to the coupling device (18).

8. System according to either claim 6 or claim 7, **characterised in that** the lid (18) comprises a base body (18.2) on which the skirt (18.5) is movably held.

9. System according to claim 8, **characterised in that**, when the container (8, 10) is in the coupled position, the skirt (18.5) is detachably fixed to the base body (18.2) by means of a first catch connection (24, 18.5.2).

10. System according to claim 9, **characterised in that** the shape of the skirt (18.5) is adapted to the shape of at least one of the containers (8, 10), in such a way that the skirt (18.5) first enters into a positive connection with this container (8, 10) when said container is transferred into the coupled position and the first catch connection (24, 18.5.2) can be produced automatically by the further transfer.

11. System according to any one of claims 8 to 10, **characterised in that**, in the uncoupled position of the container (8, 10), the skirt (18.5) is detachably fixed to the base body by means of a second catch connection (24, 18.5.3).

12. System according to claim 11, **characterised in that** the shape of the skirt (18.5) is adapted to the shape of at least one of the containers (8, 10), in such a way that the skirt (18.5) is positively connected to this container (8, 10) when said container is in the coupled position and the second catch connection (24, 18.5.2) can be produced automatically by the transfer into the uncoupled position of the container (8, 10).

13. System according to either claim 1 or claim 2, **characterised in that** the opening (10.2) of at least one of the containers (10) is delimited by an edge (10.3) on which a corresponding coupling member formed from two diametrically opposed catch hooks (10.1) is arranged.

14. System according to claim 13, **characterised in that** at least one recess (10.4) is formed on the edge (10.3) of the container wall (10.5), which recess extends substantially vertically in relation to said edge.

## Revendications

1. Système, composé d'au moins deux réservoirs (8, 10) et d'un dispositif d'accouplement (18) pour le raccordement, conduisant du liquide, des réservoirs (8, 10) à un appareil ménager, dans lequel les réservoirs (8, 10) sont, au moins dans la zone de contact avec le dispositif d'accouplement (18), constitués avec des formes différentes l'une de l'autre, et le dispositif d'accouplement (18) présente une conduite de liquide (20) pour transporter le liquide hors du réservoir (8, 10) respectivement accouplé vers l'appareil ménager dont l'extrémité d'évacuation (20.1) est constituée pour le raccordement détachable à une conduite (22) de l'appareil ménager, et dans lequel le dispositif d'accouplement (18) présente un premier organe d'accouplement (18.3) et un deuxième organe d'accouplement (18.4) différent du premier, et un réservoir (8) présente un organe d'accouplement (8.2) correspondant au premier organe d'accouplement (18.3), et l'autre réservoir (10) présente un organe d'accouplement (10.1) correspondant au deuxième organe d'accouplement (18.4), pour le raccordement détachable du dispositif d'accouplement (18) et du réservoir (8, 10) respectif.

2. Système selon la revendication 1,
**caractérisé en ce que**
au moins une des deux paires d'accouplement (18.3, 8.2 ; 18.4, 10.1) est constituée à la façon d'un emboîtement à baïonnette.

3. Système selon la revendication 1 ou 2,
**caractérisé en ce que**
le dispositif d'accouplement (18) est constitué comme un couvercle qui, dans l'état accouplé au réservoir (8, 10) respectif, recouvre sensiblement une ouverture (8.1, 10.2) du réservoir (8, 10).

4. Système selon la revendication 3,
**caractérisé en ce que**
le premier et le deuxième organe d'accouplement (18.3, 18.4) sont disposés sur le couvercle (18) de façon concentrique l'un à l'autre.

5. Système selon la revendication 3 ou 4,
**caractérisé en ce que**
le couvercle (18) présente une manette (18.1), en particulier une poignée.

6. Système selon l'une des revendications 3 à 5,
**caractérisé en ce que**
le couvercle (18) présente un tablier (18.5) pour recouvrir la zone de contact du dispositif d'accouplement (18) et du réservoir (8, 10) qui lui est accouplé.

7. Système selon la revendication 6,
**caractérisé en ce que**
le tablier (18.5) présente au moins une glissière de guidage (18.5.1) dans laquelle l'organe d'accouplement (10.1) correspondant d'au moins un des réservoirs (10) entre en prise lors de son transfert dans la position accouplée au couvercle (18).

8. Système selon l'une des revendications 6 ou 7,
**caractérisé en ce que**
le couvercle (18) présente un corps de base (18.2) sur lequel le tablier (18.5) est retenu de façon mobile.

9. Système selon la revendication 8,
**caractérisé en ce que**
le tablier (18.5), dans la position accouplée du réservoir (8, 10), est fixé de façon détachable sur le corps de base (18.2) au moyen d'un premier raccordement cranté (24, 18.5.2).

10. Système selon la revendication 9,
**caractérisé en ce que**
la forme du tablier (18.5) est harmonisée à la forme d'au moins un des réservoirs (8, 10) de sorte que le tablier (18.5) avec ce réservoir (8, 10) adopte, lors de son transfert dans la position accouplée, d'abord une liaison de forme et de sorte que, du fait de la suite du transfert, le premier raccordement cranté (24, 18.5.2) peut être établi automatiquement.

11. Système selon l'une des revendications 8 à 10,
**caractérisé en ce que** le tablier (18.5), dans la position désaccouplée du réservoir (8, 10), peut être fixé de façon détachable sur le corps de base (18.2) au moyen d'un deuxième raccordement cranté (24, 18.5.3).

12. Système selon la revendication 11,
**caractérisé en ce que**
la forme du tablier (18.5) est harmonisée à la forme d'au moins un des réservoirs (8, 10) de sorte que le tablier (18.5) est raccordé en liaison de forme à ce réservoir (8, 10) dans la position accouplée du réservoir (8, 10) et de sorte que, du fait du transfert dans la position désaccouplée du réservoir (8, 10), le deuxième raccordement cranté (24, 18.5.3) peut être établi automatiquement.

13. Système selon la revendication 1 ou 2,
**caractérisé en ce que**
l'ouverture (10.2) d'au moins un des réservoirs (10) est limitée par un bord (10.3) sur lequel est disposé un organe de raccordement correspondant constitué de deux crochets d'encliquetage (10.1) diamétralement opposés.

14. Système selon la revendication 13,
**caractérisé en ce que**,
sur le bord (10.3), il est constitué dans la paroi de réservoir (10.5) au moins un évidement (10.4) disposé sensiblement verticalement par rapport au bord.
